# EUROPEAN PATENT APPLICATION

(11) **EP 1 175 033 A2**
(43) Date of publication of application: **23.01.2002**
(21) Application number: 01116769.9
(22) Date of filing: 20.07.2001
(51) Int. Cl.: H04J 14/02, H04J 3/14

(54) **Wavelength division multiplexing transmission system and transmitter and receiver therefor**

(30) Priority: 21.07.2000 JP 2000221346
(71) Applicant: Sumitomo Electric Industries, Ltd., Osaka (JP)
(72) Inventor: Maeda, Yoshihiko, Yokohama Works of, Sakae-ku, Yokohama-shi, Kanagawa (JP)
(74) Representative: HOFFMANN - EITLE

(57) **Abstract**

A CPU 17 of a transmitter 10 monitors a 'Loss Of Signal' alarm from an SDH signal receiving circuit 11 or a 'Loss Of Lock' alarm from the clock recovery circuit 12. When CPU 17 detects any one of these alarms, the CPU 17 changes a threshold value of the driving circuit so as to fix the output of the driving circuit. Based on the relationship between a bias voltage and an optical output level of the transmitter, which are preliminary stored in the CPU, a bias voltage for the electrical-to-optical converter is calculated and sent to a bias setting circuit 15.

## Description

### BACKGROUND OF THE INVENTION

### 1. Field of the Invention

The present invention relates to a WDM transmission (WDM) system and a transmitter and a receiver therefor. More particularly, the invention relates to the WDM transmission that keeps an optical power in an appropriate level to prevent the transmission of other normal optical signals from being adversely affected when an optical signal with specific wavelength is missed.

### 2. Description of the Related Art

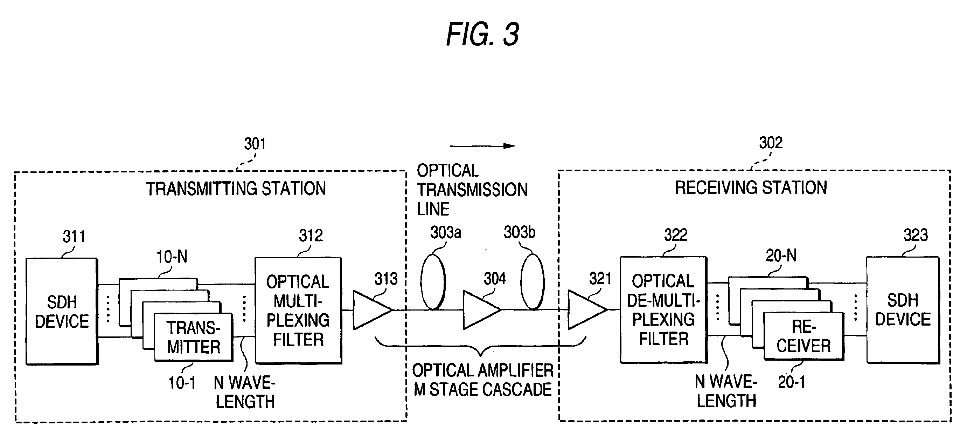

As a digital transmission system in a public communication network using an optical fiber, a system is known in which a Synchronous Digital Hierarchy (SDH) device and the Wavelength Division Multiplexing (WDM) device are combined. Fig. 3 shows the block diagram of the combined system. A transmitting station 301 comprises an SDH device 311, the plural optical transmitters (10ₗ ∼ 10_{N}), an optical multiplexing filter 312, and an optical output amplifier 313. Optical signals from SDH device 311, the wavelengths of which are in 1.3µ m band, are led into the corresponding transmitter and transmitter outputs the optical signal of the 1.55 µm wavelength band for the WDM transmission. Respective optical signals from transmitters are multiplexed in the optical multiplexing filter 312, and multiplexed signal is amplified in the optical amplifier 313 and output to a transmission line 303.

In a receiving station 302, the WDM signal transmitted from the transmission line 303 is de-multiplexed in a de-multiplexed filter 322. One optical signal de-multiplexed in the filter 322 is led to the corresponding receiver (20ₗ ∼ 20_{N}). In the receiver, the inputted optical signal with 1.55 µm wavelength band is output to the SDH device 323 after the wavelength converting to the 1.3 µm band.

The optical transmission system as shown in the Fig. 3, some cases will occur that one or more optical signals input into transmitter disappear due to, for example, the disconnection of an optical connector or the breaking of the optical fiber. The output of the receiver coupled to such signal disappearing input will vanish. Since the output amplifier 313 or the amplifier inserted into the optical transmission line 304 operates so as to keep its optical output power to be constant (Automatic Power Control), optical signals for not disappearing wavelength are amplified over to its appropriate level, which lowers the Signal to Noise Ratio (SNR), or may cause the breakdown of the receiver (20ₗ∼20_{N}) due to the excessive optical input power.

Some techniques to overcome problems above mentioned are known. One is to provide a spare transmitter that outputs the light with the extra wavelength to the signal light (Japanese Patent Unexamined Publication No. Hei. 10-322287). When the input signal light disappears at one transmitter, the extra transmitter will substitute for such signal disappearing transmitter and the optical power level of the optical multiplexing filter output to the transmission line will maintain the predetermined value.

The other method is to adjust the wavelength of the light output from the extra transmitter to that of disappearing signal. The optical output level of the multiplexing filter will be also constant in this method.

However, alternative explained above needs at least one extra transmitter and to change the transmitters and to adjust the wavelength become complicated, which result in the raising the device.cost.

Another technique is also known in the WDM system that the information in the transmitting station, which contains the signal disappearing or the signal out-synchronizing in some transmitter are transferred to the receiving station by the extra wavelength not corresponding to the signal one. In the receiving station, the optical output of the receiver corresponding to the signal disappearing transmitter is shut down after receiving the information through the extra wavelength.

However, instantaneous controls will not performed by this method due to the time difference between the signal transmission and the information transmission.

### SUMMARY OF THE INVENTION

The present invention has been made to overcome above problems. It is an object to provide a WDM transmission system and a transmitter and a receiver therefor that keeps an optical power in an appropriate level to prevent the transmission of other normal optical signals from being adversely affected when an optical signal with specific wavelength is missed. In order to achieve the object, a WDM transmission system has a transmitter and a receiver. The transmitter receives an SDH optical signal and wavelength-converts the SDH signal to an optical signal for a WDM transmission. The receiver receives one of the WDM signal and wavelength-converts the received signal to an SDH optical signal. In the system, the transmitter outputs the optical signal with non-modulated and the same optical level with the modulated state when the transmitter detects an input signal missing and/or an incorrect transmission rate. The receiver shuts down an optical output of the receiver when the non-modulated signal is detected.

In the system above mentioned, the transmitter has a signal receiving circuit, a first clock recovery circuit, a threshold setting circuit, and a bias adjusting circuit. The receiving circuit receives the SDH optical signal, converts the input optical signal to a corresponding electrical signal, and detects a state of the input signal missing. The first clock recovery circuit generates a clock signal from the signal converted by the receiving circuit and detects the out of synchronous of the clock. The threshold setting circuit sets an input threshold value of a driving circuit of an electrical-to-optical converter of the transmitter. The bias adjusting circuit adjusts a bias voltage of the electrical-to-optical converter. When the receiving circuit detects the input signal missing, or the recovery circuit detects the out of synchronous, the setting circuit sets the threshold value so as to fix the output of the driving circuit, and the adjusting circuit adjusts a bias voltage such that the optical output level of the transmitter is equal to the optical level in a normal state.

Further in the system, the receiver has an optical-to-electrical converter, a second clock recovery circuit and an SDH signal generating circuit. The optical-to-electrical converter converts the input WDM signal to a corresponding electrical signal and detects the optical input signal missing. The second clock recovery circuit generates the clock signal from the electrical signal converted by the optical-to-electrical converter and detects the out of synchronous of the clock. The SDH signal generating circuit generates a SDH optical signal. The generating circuit shuts down an optical output of it self when the optical-to-electrical converter detects the input optical signal missing, or the recovery circuit detects the out of synchronous.

### BRIEF DESCRIPTION OF THE DRAWINGS

FIG. 1 is a block diagram showing an example of a transmitter according to the present invention;
FIG. 2 is a block diagram showing an example of a receiver according to the present invention;
FIG. 3 is a block diagram showing WDM transmission system connecting two SDH devices;
FIG. 4 is a graph for explaining a bias setting procedure; and
FIG. 5A and 5B are flow charts showing algorithms in CPUs of a transmitter and a receiver according to the present invention.

### DETAILED DESCRIPTION OF THE PREFERRED EMBODIMENT

An embodiment of the present invention will be described below in detail with reference to the accompanying drawings.

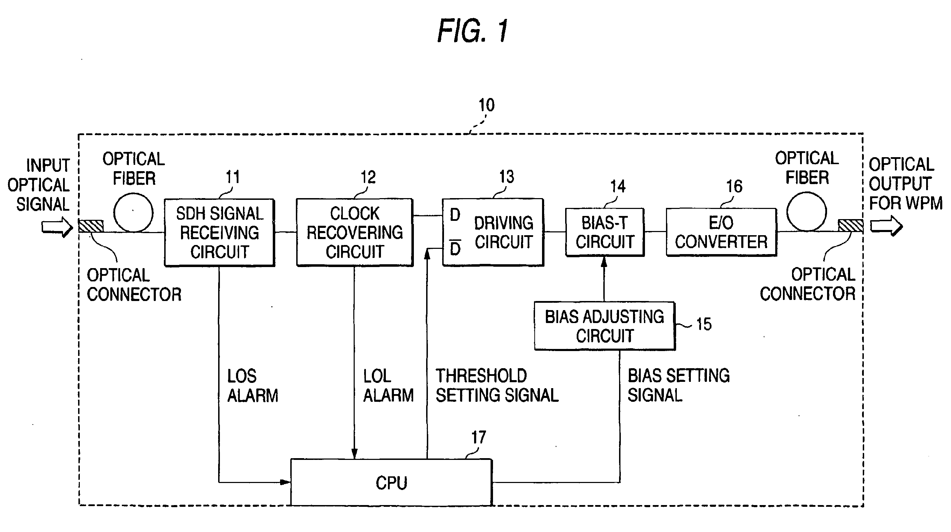

Fig. 1 is a block diagram showing an example of a transmitter according to the present invention. A Transmitter 10 includes an SDH signal receiving circuit 11, a clock recovery circuit 12, a driving circuit 13, a bias-T circuit 14, a bias adjusting circuit 15, an Electrical-to-Optical (E/O) converter 16, and a CPU 17. The SDH signal receiving circuit 11 receives an input optical signal, the wavelength of which is in 1.3 µm band, from an SDH device to convert the input optical signal into a corresponding electrical signal. The clock recovery circuit 12 recovers a clock signal from the electric signal converted by the SDH signal receiving circuit 11. The driving circuit 13 drives, for example, an external modulator of the E/O converter 16. The bias-T circuit 14 and the bias adjusting circuit 15 give a bias voltage to the modulator. The E/O converter 16 includes the external modulator and a laser diode, which are not shown in the Fig. 1.

The input optical signal from the SDH device is received by the SDH signal receiving circuit 11 and converted into an electric signal. The SDH receiving circuit 11 monitors the power level of the input optical signal. When the power level of the input signal is lower than a predetermined level, the SDH receiving circuit sends a "loss of signal" (LOS) alarm to the CPU 17. The clock recovery circuit 12 recovers a clock signal from the electric signal converted by the SDH receiving circuit 11 and detects a frame synchronous signal. When the clock can not be recovered or when the frame synchronous can not be established, the clock recovery circuit 12 sends a "loss of lock" (LOL) alarm to the CPU 17.

When an optical fiber between the SDH device and the SDH signal receiving circuit 11 is broken down or an optical connector installed in the input port is disconnected, the SDH signal receiving circuit 11 receives no optical signal and sends the LOS alarm to the CPU 17. When the transmitter receives the optical signal with incorrect transmission rate, the clock recovery circuit 12 detects the out of synchronous signal and sends the LOL alarm to the CPU 17.

The output of the clock recover circuit 12 is input to the driving circuit 13 and is amplified to a swing voltage enough to drive the external modulator in the E/O converter 16. An input threshold value of the driving circuit 13 is determined by a threshold signal output from the CPU 17. The driving signal for the external modulator is superimposed on a bias voltage set by the bias adjusting circuit 15 through the bias-T circuit 14. The bias voltage controlled by the CPU 17 is determined by the extinction rate of the external modulator.

In the E/O converter 16, a light from a laser diode, the wavelength of which is in 1.55 µm band, is modulated in the external modulator by the driving signal superimposed with a bias voltage, and is multiplexed by an optical multiplexing filter together with other wavelength multiplexing signal light.

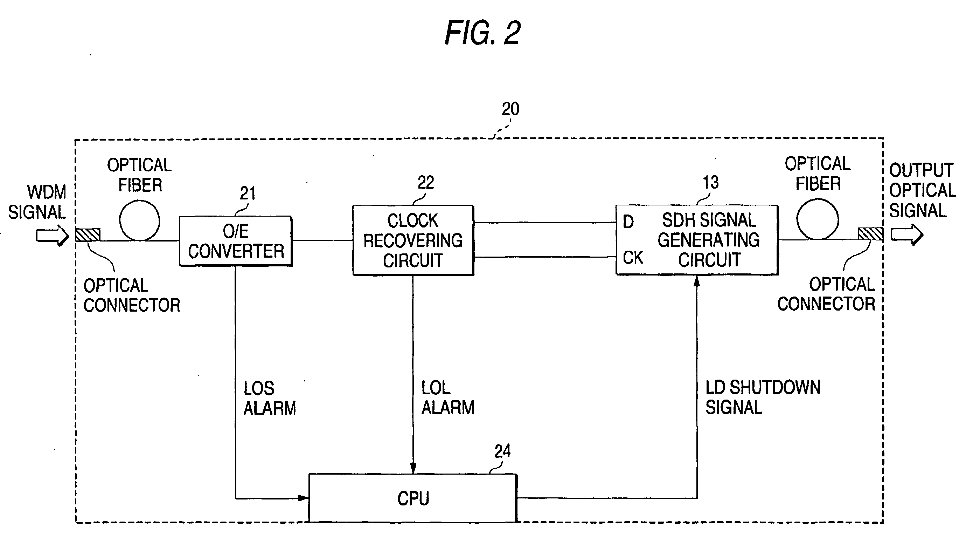

Fig. 2 is a block diagram showing an example of the receiver of the present invention. The receiver 20 includes an Optical-to-Electrical (O/E) converter 21, a clock recovery circuit 22, an SDH signal generating circuit 23, and a CPU 24. The O/E converter 21 receives one of the WDM signal, the wavelength of which is in 1.55 µ m band and is de-multiplexed in an optical de-multiplexing filter through an optical connector. The O/E converter converts to the optical signal to the corresponding electrical signal. The clock recovery circuit 22 recovers a clock signal. The SDH signal generating circuit 23 converts the electrical signal to the corresponding optical signal with wavelength in 1.3 µm and sends the converted light to the SDH device.

The O/E converter 21 monitors the power level of the input optical signal. When the power level of the input signal is lower than a predetermined level, the E/O converter sends "loss of signal" (LOS) alarm to the CPU 24. The clock recovery circuit 22 recovers a clock signal from the electric signal converted by the O/E converter 21 and detects a frame synchronous signal. When the clock can not be recovered or when the frame synchronous can not be established, the clock recovery circuit 22 sends a "loss of lock" (LOL) alarm to the CPU 24.

When an optical transmission line between the transmitter and the O/E converter is broken, or when an optical connector installed in the input port of the receiver is disconnected, the LOS alarm is sent to the CPU 24 from the O/E converter 21. When a signal having an incorrect rate is input to the O/E converter, the LOL alarm is sent to the CPU 24. Receiving the LOS alarm or the LOL alarm by the CPU 24, the CPU 24 sends the laser diode shutting down signal to the SDH signal generating circuit 23 to extinct the optical output. The optical signal from the SDH signal generating circuit 23 is transmitted to the SDH device through an optical connector and an optical fiber.

Fig. 3 is a diagram showing an example of a WDM system connecting two SDH devices. A transmitting station 301 is constituted by an SDH device 311, transmitters (10ₗ ∼ 10_{N}), an optical multiplexing filter 312, and an optical amplifier 313. The transmitters (10ₗ ∼ 10_{N}) of N wavelengths convert the input optical signals in 1.3 µm wavelength band from the SDH device into the respective optical output signal with 1.55 µm wavelength band for the WDM transmission. The optical multiplexing filter 312 multiplexes the optical signals of the N wavelengths output from the transmitters (10ₗ ∼ 10_{N}). The optical amplifier 313 amplifies the WDM signal and transmits it to an optical transmission line 303a.

A receiving station 302 is constituted by an optical amplifier 321, an optical de-multiplexing filter 322, receivers (20ₗ ∼ 20_{N}), and an SDH device 323. The optical amplifier 321 receives the WDM signal from a transmission line 303b. The optical de-multiplexing filter 322 divides the multiplexed signal into serious of independent optical signals with different wavelengths in 1.55 µm wavelength band. The receivers (20ₗ ∼ 20_{N}) convert the input optical signal to the corresponding optical signal of 1.3 µm wavelength and sends the converted signal to the SDH device.

A case will be described below when an input optical signal of any one of the transmitters (10ₗ ∼ 10_{N}) is missed. This case corresponds to the one that the optical fiber between the SDH device and the SDH signal receiving circuit is broken or the optical connector installed at the input port is disconnected in Fig. 1. In such case, the SDH signal receiving circuit 11 sends a LOS alarm to the CPU 17. The CPU 17 sends a threshold setting signal to the driving circuit 13 to set the threshold voltage to the predetermined value so as to fix the output of the driving circuit to the high or low level, in which no output signal generated from the driving circuit. Also, the CPU 17 sends the bias setting signal to the bias adjusting circuit 15 to change the bias voltage superimposed on the out put of the driving circuit 13.

By a serious control from the CUP 17, the output of the E/O converter shows no modulation characteristics and the power level of the output keeps substantially equal to that in the modulated state. Since the power level of the WDM signal transmitted in the transmission line (303a and 303b) is maintained, optical signals not missed in the transmitter normally transmitted to the receiving station is not influenced by the signal disappearing.

The receiver corresponds to the transmitter, the optical signal of which is missed, receives an optical signal with the equal level in the normal operation. In this case, while the O/E circuit does not send the LOS alarm, the clock recover circuit 22 sends the LOL alarm to the CPU 24 because the input optical signal of the receiver does not contain any clock signal nor frame synchronous signal. The CPU 24 sends the laser diode shutting down signal to the SDH signal generation circuit 23 to extinct the output of the receiver. By the operation explained above, fault information generated in the SDH device 311 can be transmitted through the WDM system to the other SDH device 323 located downstream side of the network.

Next explains a case in which an input signal of any one of transmitters (10ₗ ∼ 10_{N}) becomes an incorrect transmission rate. The SDH-signal receiving circuit 11 of the transmitter under concerned does not send a LOS alarm because the receiving circuit 11 receives some signal with incorrect rate. On the other hand, the clock recovery circuit 12 sends the LOL alarm to the CPU because the recovery circuit can not detect the frame synchronous and set into the out-of-synchronous condition. The CPU receiving the LOL alarm sends the threshold setting signal to the driving circuit 13 to set the input threshold voltage to the predetermined value so as to fix the output of the driving circuit to the high or low level, in which no signal is output from the circuit 13. Further to the threshold setting signal, the CPU 17 sends the bias setting signal to the bias adjusting circuit 15. By the serious of controls explained above, the output of the E/O converter 16 shows a non-modulated behavior arid its level is equal to that of the normal state. Even if some transmitter receives an optical signal with incorrect rate, the output power level of the transmitter under consideration keeps constant and the level of the light transmitted in the WDM transmission line (303a, 303b) is also maintained to be constant.

The optical signal with a power level equal to the normal state is input to the receiver (any one of receivers 20ₗ ∼ 20_{N}) opposing to the transmitter to which the optical signal with an incorrect rate is input. The O/E converter 21 of the receiver under concerned sends no LOS alarm because some optical signal is input to the receiver 20. While, the clock recovery circuit 22 sends the LOL alarm to the CPU 24 because the recovery circuit can not detect the clock or the frame synchronous signal from the no-modulated electrical signal converted in the O/E converter. The CPU 24 receiving the LOL alarm sends the laser diode shutting signal to the SDH signal generating circuit to extinct the optical output of the receiver. Thus, fault information generated in the SDH device 311 in the transmitting station 301 can be transmitted to the SDH device 323 of the receiving station 302.

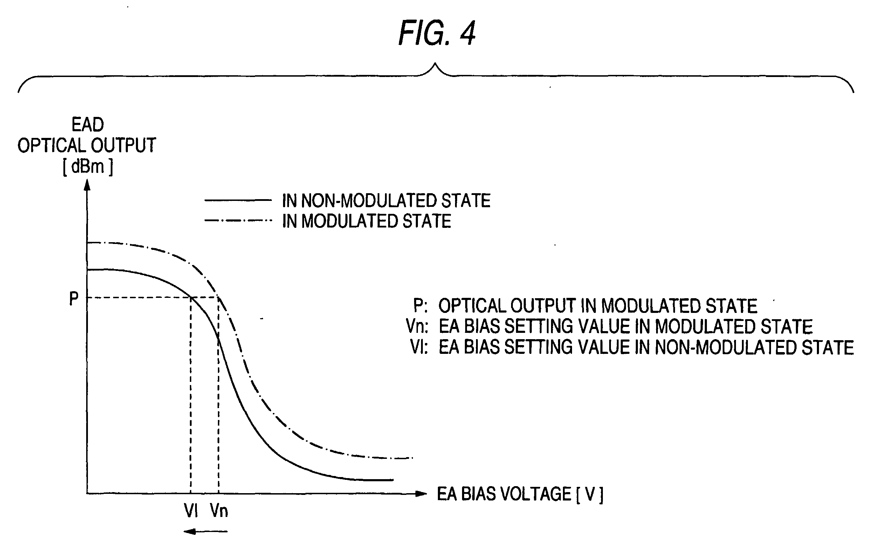

Fig. 4 explains one switching algorithm of the bias setting signal. Fig. 4 corresponds to the algorithm for an external modulator of the electro-absorption type. The CPU 17 receiving one of the LOS alarm or the LOL alarm in the transmitter (10ₗ ∼ 10_{N}) sends the bias setting signal to the bias adjusting circuit 15 to change the bias voltage superimposed on the output signal of the driving circuit 13. The practical value of the bias voltage is determined by the extinction ration of the external modulator. As shown in Fig. 4, a bias voltage Vn, by which the normal modulated signal is transmitted, and a voltage Vi different from Vn, by which the un-modulated signal is transmitted, are stored in the CPU 17. The CPU changes the bias setting signal from Vn to Vi or Vi to Vn depending on the conditions of the optical input.

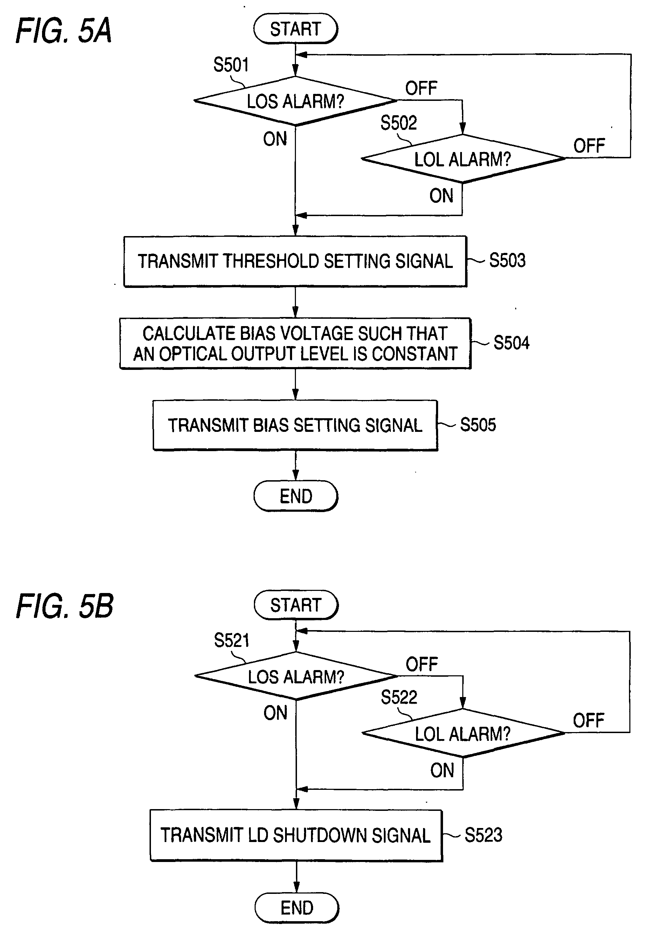

Fig. 5A is a flow chart showing a control algorithm of the CPU 17 in the transmitter. Fig. 5B is a flow chart showing an algorithm of the CPU 24 in the receiver. In Fig. 5A, the CPU 17 monitors an LOS alarm from the SDH signal receiving circuit 11 or an LOL alarm from the clock recovery circuit 12 (S501, S502). When the CPU detects one of the alarms, the CPU sends a threshold setting signal to the driving circuit 13 so as to fix the output of the driving circuit 13 to "High" or "Low" level (S503). Simultaneously, the CPU 17 sends the bias setting signal, which is calculated from the relationship preliminary stored in the CPU 17, to the bias adjusting circuit 15 (S505).

In Fig. 5B, the CPU 24 in the receiver 20 watches an LOS alarm from the O/E converter 21 or an LOL alarm from the clock recovery circuit 22 (S521, S522). When either of alarms is detected, the CPU sends the laser diode shutting down signal to the SDH signal generating circuit 23 (S523) to vanish the optical output of the receiver.

As described above, when some fault like the optical input missing or the incorrect transmission ratio occur in the transmitter, the optical output of this transmitter for the WDM is set to be non-modulated and equivalent level to the modulated state so that the LOL alarm can be generated in the receiver without fail. Since it is kept constant that the optical output of the transmitter for the WDM and the input level of the optical amplifier inserted into the transmission line, the deterioration of the SNR or the over power of the receiver input can be prevented. Moreover, since the fault information is transmitted by the same wavelength with the signal wavelength, spare transmitter and receiver are not necessary and the transmission time difference between the data and the fault information can be eliminated.

According to the present invention, when the transmitter detects the optical input signal missing or the incorrect transmission optical signal, the transmitter outputs the optical signal with a non-modulated and equal level to the modulated state. When the receiver detects the non-modulated signal, the receiver shuts down the optical output. By the method above, even if one optical signal with certain wavelength is missed or out of synchronous in the WDM transmission system, optical signals with other wavelength can be normally transmitted.

## Claims

1. A wavelength division multiplexing transmission system comprising:
a transmitter for receiving an SDH optical signal and converting a wavelength of the SDH optical signal to an optical signal for a wavelength division multiplexing; and
a receiver for receiving one of the wavelength division multiplexed signal and converting the wavelength of the received signal to an SDH optical signal,
wherein said transmitter outputs the optical signal with non-modulated state and the same optical level with modulated state when the transmitter detects an input signal missing and/or an incorrect transmission rate; and said receiver shuts down an optical output of the receiver when the non-modulated signal is detected.

2. The wavelength division multiplexing transmission system according to claim 1, wherein the transmitter comprises:
a signal receiving circuit for receiving the SDH optical signal and converting the input SDH optical signal to a corresponding electrical signal, the receiving circuit detecting a state of the input signal missing;
a first clock recovery circuit for generating a clock signal from the electrical signal converted by the receiving circuit, said recovery circuit detecting the out of synchronous of the clock;
a threshold setting circuit for setting an input threshold value of a driving circuit of an electrical-to-optical converter of the transmitter; and
a bias adjusting circuit for adjusting a bias voltage of the electrical-to-optical converter,
wherein the setting circuit sets the input threshold voltage so as to fix an output of the driving circuit, and the adjusting circuit adjusts the bias voltage such that an optical output level of the transmitter is equal to an optical level in a normal state, when the receiving circuit detects the input signal missing, or the recovery circuit detects the out of synchronous.

3. The wavelength division multiplexing transmission system according to claim 1, wherein the receiver comprises:
an optical-to-electrical converter for converting an input optical signal to a corresponding electrical signal, said converter detecting a state of the input signal missing;
a second clock recovery circuit for generating a clock signal from the electrical signal converted by the optical-to-electrical converter, the second recovery circuit detecting the out of synchronous of the clock; and
an SDH signal generating circuit for generating a SDH optical signal, the generating circuit shutting down an optical output of the generating circuit when then optical-to-electrical converter detects the input optical signal missing, or the second recovery circuit detects the out of synchronous.

4. The wavelength division multiplexing system according to claim 2, the transmitter further comprises:
a storage device for storing a relationship between the bias voltage and the optical output level of the transmitter, or a relationship between the predetermined bias voltage in a modulated state and a non-modulated state of the transmitter.

5. A transmitter for converting a Synchronous Digital Hierarchy (SDH) signal into an optical signal for wavelength division multiplexing transmission, comprising:
a signal receiving circuit for receiving the SDH optical signal and converting the input SDH optical signal to a corresponding electrical signal, the receiving circuit detecting a state of an input signal missing;
a first clock recovery circuit for generating a clock signal from the electrical signal converted by the receiving circuit, said recovery circuit detecting the out of synchronous of the clock;
a threshold setting circuit for setting an input threshold value of a driving circuit of an electrical-to-optical converter of the transmitter; and
a bias adjusting circuit for adjusting a bias voltage of the electrical-to-optical converter,
wherein the setting circuit sets the input threshold voltage so as to fix an output of the driving circuit, and the adjusting circuit adjusts the bias voltage such that an optical output level of the transmitter is equal to an optical level in a normal state, when the receiving circuit detects the input signal missing, or the recovery circuit detects the out of synchronous.

6. The transmitter according to claim 5, further comprises:
a storage device for storing a relationship between the bias voltage and the optical output level of the transmitter, or relationship between the predetermined bias voltage in a modulated state and a non-modulated state of the transmitter.

7. A receiver for receiving a wavelength division multiplexing signal and converting into a synchronous digital hierarchy (SDH) signal, comprising:
an optical-to-electrical converter for converting an input optical signal to a corresponding electrical signal, said converter detecting an the input signal missing;
a second clock recovery circuit for generating a clock signal from the electrical signal converted by the optical-to-electrical converter, the second recovery circuit detecting the out of synchronous of the clock; and
an SDH signal generating circuit for generating a SDH optical signal, the generating circuit shutting down an optical output of the generating circuit when then optical-to-electrical converter detects the input optical signal missing, or the second recovery circuit detects the out of synchronous.
